# DEMANDE DE BREVET EUROPEEN

(11) **EP 1 944 276 A1**
(43) Date de publication de la demande: **16.07.2008**
(21) Numéro de dépôt: 06126402.4
(22) Date de dépôt: 18.12.2006
(51) Int. Cl.: C03C 17/00, C03C 17/02, C03C 17/06, C03C 17/28, B32B 17/10

(54) **Panneau lumineux**

(71) Demandeur: AGC Flat Glass Europe SA, 1170 Bruxelles (BE)
(72) Inventeur: La désignation de l'inventeur n'a pas encore été déposée
(74) Mandataire: Decamps, Alain René François

(57) **Abrégé**

Panneau lumineux à rendement optique élevé comprenant des diodes électroluminescentes ("LED's") et un substrat rigide isolant les LED's de l'atmosphère extérieure au panneau, comprenant un substrat en verre sélectionné parmi les verres extra clairs à basse teneur en fer (≤250 ppm).
Utilisation du panneau comme panneau d'éclairage ou comme panneau de décoration.

## Description

La présente invention concerne un panneau lumineux à rendement optique élevé comprenant des diodes électroluminescentes (LED's).

On connaît un dispositif d'éclairage comprenant un panneau de support transparent en verre revêtu de bandes conductrices de l'électricité sur lesquelles sont montées des diodes électroluminescentes émettant leur lumière au travers du support transparent (brevet US 6,270,236 B1).

Dans ce dispositif connu, la lumière blanche très pure émise par les LED's est cependant colorée en jaune-vert pâle lorsqu'elle sort du support transparent.

L'invention remédie à cet inconvénient en fournissant un panneau lumineux qui préserve la qualité pure et brillante exempte de toute coloration de la lumière émise par les LED's.

A cet effet, l'invention concerne un miroir émetteur de radiations lumineuses tel que défini dans la revendication 1.

Les revendications dépendantes définissent d'autres formes possibles de réalisation de l'invention, dont certaines sont préférées.

Outre la préservation de la couleur blanche des LED's, le panneau lumineux conforme à l'invention présente aussi l'avantage de n'absorber qu'une très faible proportion de l'énergie lumineuse émise par les LED's, conduisant ainsi à un rendement optique élevé.

Le panneau lumineux à rendement optique élevé selon l'invention comprend des diodes électroluminescentes ou LED's qui génèrent le flux lumineux. Par flux lumineux, on entend aussi bien les radiations qui appartiennent au spectre visible que celles qui sont extérieures à celui-ci. Les LED's émettant des radiations appartenant au spectre visible sont cependant les plus employées. Le flux lumineux émis par les LED's est généralement de nature monochromatique ou composé d'un mélange de plusieurs flux monochromatiques de longueurs d'onde déterminées.

Le panneau lumineux selon l'invention comprend aussi un substrat rigide isolant les LED's de l'atmosphère extérieure au panneau. Par substrat rigide on entend ici un corps plein de forme plate, c'est-à-dire de faible épaisseur comparée à ses autres dimensions et de résistance mécanique aux sollicitations de flexion et de torsion suffisante pour ne pas se déformer sous l'action de sollicitations extérieures que l'on rencontre couramment dans le milieu ambiant dans lequel on utilise généralement le panneau. En particulier, les substrats rigides utilisés résistent généralement bien au vent, et aux intempéries en général, que l'on rencontre dans les milieux d'utilisation de ces panneaux, y compris la glace et la neige. Le substrat peut se présenter sous la forme d'une plaque rigide constituée d'un matériau unique ou au contraire être le résultat d'un assemblage de plusieurs feuilles ou plaques du même matériau ou de matériaux différents collés ou soudés les uns aux autres. Des exemples sont des plaques métalliques, des plaques en céramique, en bois, en matière plastique ou en verre, ainsi que les laminés et placages réalisés avec un ou plusieurs de ces matériaux. Des plaques de matériau contre-plaqué comprenant deux feuilles ou plus en au moins un de ces matériaux comprenant une âme réalisée en déchets de petites dimensions des mêmes matériaux collés entre eux, éventuellement aussi avec une matière de charge, peuvent aussi être utilisées, par exemple les contre-plaqués en bois.

Selon l'invention, le matériau du substrat ou tout au moins, une partie du substrat, par exemple une ou plusieurs des plaques qui le constitue, est transparent à la lumière du spectre visible. C'est le cas, notamment des substrats en verre ainsi qu'en matière plastique transparente (encore appelée "verre organique"). Les verres inorganiques traditionnels sont préférés. Afin d'atteindre un rendement optique élevé, l'invention requiert que les substrats en verre utilisés soient des verres de type extra clairs. Les verres extra clairs sont des verres qui transmettent quasi toute la lumière visible incidente. Généralement, ils présentent un coefficient Tv de transmission lumineuse de plus de 90,8 % pour une épaisseur de 4 mm et une source lumineuse normalisée par la Commission Internationale de l'Eclairage (C.I.E.) de type A. Les verres extra clairs préférés comme substrat sont ceux qui présentent une Tv d'au moins 91,0 % dans les mêmes conditions (4 mm d'épaisseur et source lumineuse standard "A"). Ces performances sont atteintes à condition que les verres extra clairs utilisés comme substrat ne contiennent que très peu de fer dans leur composition. Toutes espèces chimiques confondues, il est impératif que les verres extra clairs convenant pour les substrats des panneaux conformes à l'invention ne comprennent pas plus de 0,040 % de fer total, exprimé sous la forme de Fe₂O₃. De préférence, il est avantageux qu'ils ne contiennent pas plus de 0,025 % de Fe₂O₃. Les substrats en verre extra clairs les plus préférés sont ceux qui ne contiennent pas plus de 0,018 % de fer total, exprimé en Fe₂O₃.

Ces verres extra clairs présentent une teinte neutre brillante, parfois très légèrement colorée, en particulier lorsqu'examinée sous une grande épaisseur sur la tranche du verre, par exemple. Lorsque la coloration légère apparaît plutôt légèrement bleuâtre plutôt que verdâtre ou jaunâtre, l'aspect brillant du verre en paraît encore renforcé. On admet généralement qu'à cette fin, la mesure de longueur d'onde dominante en transmission d'un verre de 4 mm d'épaisseur illuminé en lumière normalisée de type "C" par la C.I.E. ne doit pas dépasser 495 nm. Par ailleurs, la couleur bleue ne doit pas non plus tirer vers les teintes pourpres. Il est pour cela souhaitable que la longueur d'onde dominante d'un tel verre mesurée dans les mêmes conditions soit d'au moins 460 nm et, de préférence 470 nm. Afin de parvenir à la teinte adéquate, les verres extra clairs qui conviennent peuvent aussi comprendre des traces de colorants sous forme d'oxydes de métaux colorés. Des traces d'oxyde de cobalt ou de petites quantités d'oxyde de néodyme peuvent ainsi être présentes dans ces verres. Lorsque l'oxyde de cobalt est présent, il est impératif qu'il ne dépasse pas 3 ppm en poids dans la composition du verre, exprimé sous forme d'oxyde CoO. De préférence, la teneur de ces verres en CoO ne dépasse pas 1,5 ppm en poids. En ce qui concerne le néodyme, on admet des quantités de 0 à 500 ppm poids, exprimées en Nd₂O₃, dans la composition du verre et de préférence de 0 à 300 ppm poids. Des oxydes de Co et de Nd peuvent être présents simultanément.

Un mode de réalisation de l'invention consiste en un panneau comprenant une feuille de matière plastique laminée avec les LED's entre deux plaques de substrat rigide, une partie au moins du substrat étant un verre extra clair. Dans ce mode, les deux plaques de substrat rigide isolent la matière plastique et les LED's de l'atmosphère extérieure qui règne autour du panneau. La matière plastique est choisie parmi celles qui sont habituellement utilisées pour les produits laminés, en particulier pour les verres laminés. En pratique, on peut choisir la matière plastique parmi les polyesters thermoplastiques, par exemple le polyvinylbutyral, les copolymères d'éthylène et d'acétate de vinyle et les polyéthylènetéréphtalates. Les LED's ont été laminées avec la matière plastique de manière telle qu'elles se situent complètement à l'intérieur de la feuille de cette matière qui est choisie avec une épaisseur d'au moins 10 % supérieure à celle des diodes et pouvant aller jusqu'à 50 % supérieure à celle des diodes. En cas de feuille de matière plastique d'épaisseur insuffisante, il est possible de laminer ensemble un empilage de plusieurs de ces feuilles de manière à dépasser d'au moins 10 % l'épaisseur des LED's. Dans une variante de ce mode de réalisation, la feuille de verre extra clair est située du côté des LED's vers lequel la lumière est émise.

Un panneau comprenant plus de deux plaques de substrat rigide, une partie étant un verre extra clair, est aussi possible. Dans ce cas, la matière plastique et les LED's sont laminées entre les deux plaques de substrat dont une partie au moins est un verre extra clair. Dans le cas où plusieurs parties de plaques de substrat différentes sont en verre extra clair, une variante est aussi de laminer la matière plastique entre plusieurs paires de plaques rigides de substrat, celles qui comprennent une partie de verre extra clair.

Dans ce mode de réalisation, il est intéressant que les deux plaques de substrat, ou les paires de plaques de substrat comprenant un verre extra clair soient complètement transparentes à la lumière visible. Dans ce mode de réalisation, on préfère que toutes les plaques de substrat rigide soient des feuilles de verre extra clair. Une variante intéressante est un panneau complètement transparent à la lumière visible dans lequel au moins deux feuilles de verre situées de part et d'autre des LED et de la matière plastique sont sélectionnées parmi les verres extra clairs.

Dans un autre mode de réalisation du panneau conforme à l'invention, le panneau est opaque ou translucide à la lumière visible. C'est le cas notamment, pour un panneau dans lequel une couche de matière opaque ou translucide par rapport à la lumière visible est située du côté des LED's vers lequel il n'y a pas d'émission de lumière. Dans cet autre mode de réalisation, on préfère que toutes les feuilles de verre situées du côté des LED's vers lequel la lumière est émise soient transparentes et sélectionnées parmi les verres extra clairs. Un cas particulier d'un panneau selon cet autre mode de réalisation est celui d'un miroir, la couche opaque étant une couche de matière réfléchissante. Cette couche réfléchissante est une couche à base d'argent. Elle est semblable à celle rencontrée dans les miroirs couramment rencontrés sur le marché. De préférence, la feuille de verre sur le quel est déposé la couche réfléchissante est obtenue par un procédé de flottage sur un bain d'étain en fusion (procédé "float") et la couche réfléchissante à base d'argent est déposée sur la face de la feuille qui a été en contact avec le bain d'étain. La couche réfléchissante à base d'argent est recouverte d'au moins une couche de peinture protectrice. De préférence, la peinture est exempte de plomb.

Un autre cas particulier de panneau opaque ou translucide à la lumière visible est celui d'un panneau peint, la couche opaque étant une couche de peinture ou d'émail. Des peintures convenant pour le panneau opaque ou translucide selon l'invention peuvent comprendre diverses résines organiques de base, telles que les résines polyuréthane, silicone, alkyde, polyester, phénolique, amine, époxy, acrylique, acryl-styrène et acrylamide en association avec des pigments organiques et/ou minéraux. Des émaux pouvant convenir comprennent aussi des pigments minéraux associés à un verre de composition plus facilement fusible que celle de la feuille de verre sur laquelle ils sont déposés.

Un autre mode de réalisation du panneau conforme à l'invention est encore celui d'un panneau de sécurité comprenant un empilage d'au moins deux structures "feuille de verre - matière plastique" laminées ensemble avec une autre feuille de verre par-dessus la dernière couche de matière plastique. Dans ce panneau de sécurité, des LED's sont disposées sur au moins une des matières plastiques situées entre deux feuilles de verre. De préférence, au moins le verre des feuilles situées du côté des LED's vers lequel la lumière est émise étant sélectionné parmi les verres extra clairs. Des empilages de 2 ou 3 structures "feuille de verre - matière plastique" laminées sont préférées.

D'une manière générale, un panneau selon un quelconque des modes de réalisation décrits plus haut est tel que la différence de couleur de la lumière émise par les LED's et celle quittant la surface du panneau est très peu élevée. Cette différence de couleur est définie, dans le système de couleurs normalisé CIELAB, par la racine carrée de la somme des carrés des différences de coordonnées L*, a* et b*. Selon l'invention, on préfère que cette différence de couleur ne soit pas supérieure à 3,70. De manière particulièrement préférée, cette différence n'excède pas 3,60.

L'invention concerne aussi l'utilisation d'un panneau selon une quelconque des formes de réalisation décrites plus haut comme panneau d'éclairage ou comme panneau de décoration.

## Revendications

1. Panneau lumineux à rendement optique élevé comprenant des diodes électroluminescentes ("LED's") et un substrat rigide isolant les LED's de l'atmosphère extérieure au panneau, **caractérisé en ce qu'**au moins une partie du substrat est un verre sélectionné parmi les verres extra clairs comprenant au plus 0,025 % en poids de fer par rapport au poids de verre, exprimé sous forme de Fe₂O₃.

2. Panneau lumineux selon la revendication précédente, **caractérisé en ce qu'**au moins une partie du substrat est un verre sélectionné parmi les verres extra clairs comprenant au plus 1,5 ppm en poids de cobalt, exprimé sous la forme de CoO.

3. Panneau lumineux selon une quelconque des revendications précédentes, **caractérisé en ce qu'**il comprend au moins une feuille de matière plastique laminée avec les LED's entre au moins deux plaques de substrat rigide transparent isolant la matière plastique et les LED's de l'atmosphère extérieure au panneau.

4. Panneau lumineux selon la revendication 3, **caractérisé en ce que** la feuille de verre extra clair est située du côté des LED's vers lequel la lumière est émise.

5. Panneau selon une quelconque des revendications précédentes, **caractérisé en ce qu'**il est un panneau transparent dans lequel au moins deux feuilles de verre situées de part et d'autre des LED et de la matière plastique sont sélectionnées parmi les verres extra clairs.

6. Panneau selon une quelconque des revendications 1 à 4, **caractérisé en ce qu'**il est un panneau opaque ou translucide dans lequel une couche de matière opaque ou translucide par rapport à la lumière visible est située du côté des LED's vers lequel il n'y a pas d'émission de lumière et que toutes les feuilles de verre situées du côté des LED's vers lequel la lumière est émise sont transparentes et sélectionnées parmi les verres extra clairs.

7. Panneau selon la revendication précédente, **caractérisé en ce qu'**il est un miroir, la couche opaque étant une couche de matière réfléchissante.

8. Panneau selon la revendication 6, **caractérisé en ce qu'**il est un panneau peint, la couche opaque étant une couche de peinture ou d'émail.

9. Panneau de sécurité selon une quelconque des revendications 1 à 8, **caractérisé en ce qu'**il comprend un empilage d'au moins deux structures "feuille de verre - matière plastique" laminées ensemble avec une autre feuille de verre par-dessus la dernière couche de matière plastique, des LED's étant disposées sur au moins une des matières plastiques situées entre deux feuilles de verre et au moins le verre des feuilles situées du côté des LED's vers lequel la lumière est émise étant sélectionné parmi les verres extra clairs.

10. Panneau lumineux selon une quelconque des revendications 1 à 9, **caractérisé en ce que** la différence de couleur définie par la racine carrée de la somme des carrés des différences de coordonnées L*, a* et b* de la lumière émise par les LED's et celle quittant la surface du panneau dans le système de couleurs CIELAB n'est pas supérieure à 3,60.

11. Utilisation du panneau lumineux selon une quelconque des revendications 1 à 10 comme panneau d'éclairage ou comme panneau de décoration.
